# EUROPÄISCHE PATENTSCHRIFT

(11) **EP 3 688 263 B1**
(45) Veröffentlichungstag und Bekanntmachung des Hinweises auf die Patenterteilung: **01.11.2023**
(21) Anmeldenummer: 18786687.6
(22) Anmeldetag: 28.09.2018
(51) Int. Cl.: E05F 15/40, E05F 15/603, E05F 15/632, E05F 15/659

(54) **VERFAHREN UND VORRICHTUNG ZUM ERKENNEN EINES VERSCHLEISSZUSTANDES EINER KOMPONENTE EINES TÜRANTRIEBSSYSTEMS EINES SCHIENENFAHRZEUGS**
METHOD AND DEVICE FOR DETECTING THE WEAR STATE OF A COMPONENT OF A DOOR DRIVE SYSTEM OF A RAIL VEHICLE
PROCÉDÉ ET DISPOSITIF SERVANT À IDENTIFIER UN ÉTAT D'USURE D'UN COMPOSANT D'UN SYSTÈME D'ENTRAÎNEMENT DE PORTE D'UN VÉHICULE SUR RAILS

(30) Priorität: 29.09.2017 DE 102017122819; 20.10.2017 DE 102017124599
(43) Veröffentlichungstag der Anmeldung: 05.08.2020
(73) Patentinhaber: Knorr-Bremse Gesellschaft mit beschränkter Haftung, 2340 Mödling (AT)
(72) Erfinder: BRAMAUER, Johann, 3341 Ybbsitz (AT)
(74) Vertreter: Aurigium Leischner & Luthe
(86) Internationale Anmeldenummer: PCT/EP2018/076418
(87) Internationale Veröffentlichungsnummer: WO 2019/063770

(56) Entgegenhaltungen:
- DE-A1- 4 214 998
- DE-A1- 19 718 631
- DE-A1-102004 011 332
- US-A1- 2015 137 963
- US-B1- 6 343 437

## Beschreibung

Die vorliegende Erfindung betrifft ein Verfahren und eine Vorrichtung zum Erkennen eines Verschleißzustands einer Komponente eines Schienenfahrzeugs gemäß den Hauptansprüchen.

Bei herkömmlichen Türantriebssystemen in Schienenfahrzeugen wird oftmals keine ausreichende Überwachung des Verschleißzustands einzelner Komponenten durchgeführt, sodass bei einer übermäßigen Abnutzung dieser Komponenten ein Türsystem ausfallen kann und somit der ordnungsgemäße Betrieb des Schienenfahrzeugs nicht sichergestellt werden kann.

Die Druckschrift US 6,343,437 B1 offenbart einen Türantrieb mit integrierter Diagnose des Türlaufs.

Die Druckschrift DE4214998A1 offenbart einen Torantrieb und Verfahren zum Betreiben eines Torantriebes

Die Druckschrift DE 10 2004 011 332 A1 offenbart eine Steuerungsvorrichtung und Verfahren zur Steuerung eines Verstellsystems, insbesondere eines Fensterhebers eines Kraftfahrzeuges.

Die Druckschrift US 2015/0137963 A1 offenbart ein Türüberwachungssystem.

Vor diesem Hintergrund stellt sich der vorliegenden Erfindung die Aufgabe, eine Möglichkeit zur verbesserten Erkennung eines Verschleißzustands einer Komponente des Schienenfahrzeugs zu schaffen.

Diese Aufgabe wird durch den Gegenstand der unabhängigen Patentansprüche gelöst.

Vorliegend wird ein Verfahren zum Erkennen eines Verschleißzustandes einer Komponente eines Türantriebssystems eines Schienenfahrzeugs gemäß Anspruch 1 vorgestellt.

Unter einem Verschleißzustand kann beispielsweise ein Grad der Abnutzung einer Komponente, ein Weg bzw. ein Spiel zwischen zwei Elementen, welches durch Abnutzung dieser Elemente während des Betriebs des Türantriebssystems entsteht, oder eine zu geringe oder zu hohe Spannung eines Riemens oder eines anderen Kraftübertragungselementes verstanden werden. Unter einer Abfolge von ersten Motorparametern kann beispielsweise ein (zeitlicher) Verlauf einer physikalischen Größe verstanden werden. Unter einer Abfolge von zweiten Motorparametern kann beispielsweise ein Verlauf der zweiten Motorparameter verstanden werden. Hierbei repräsentieren die ersten Motorparameter eine physikalische Größe, die sich von einer durch die zweiten Motorparameter repräsentierte physikalische Größe unterscheidet. Auch kann der erste Motorparameter in Abhängigkeit von dem zweiten Motorparameter dargestellt sein, speziell, wenn der Motor des Türantriebssystems in Betrieb ist. Unter einem von der Abfolge von ersten Motorparametern anhängiger Wert kann beispielsweise eine Kennlinie verstanden werden, die unter Verwendung der Abfolgen von ersten Motorparametern gebildet ist. Unter einem vorbestimmten Kriterium kann beispielsweise ein Schwellwert, ein Toleranzbereich oder dergleichen verstanden werden, mit dem die Abfolge des ersten Motorparameters oder zumindest ein daraus abgeleiteter Wert verglichen werden und bei Übereinstimmung auf einen bestimmten Verschleißzustand der Komponente des Türantriebssystems schließen lassen.

Der hier vorgestellte Ansatz basiert auf der Erkenntnis, dass technisch sehr einfach Motorparameter und/oder Zusammenhänge zwischen mehreren Motorparametern aufgezeichnet und ausgewertet werden können, um hierdurch einen Rückschluss auf einen Verschleißzustand der Komponente des Türantriebssystems ziehen zu können. Auf diese Art lässt sich sehr einfach und frühzeitig ein Verschleißzustand der Komponente des Türantriebssystems erkennen und diese Komponente gegebenenfalls auszutauschen, sodass das Schienenfahrzeug weiter im gewünschten Betriebsmodus betrieben werden kann und die Ausfallgefahr der Komponenter weitgehend minimiert ist.

Erfindungsgemäß werden im Schritt des Einlesens erste Motorparameter in Beziehung zu zweiten Motorparametern gesetzt, wobei je ein erster Motorparameter der Abfolge von ersten Motorparametern in eine Beziehung zu einem zweiten der Abfolge von zweiten Motoparametern gesetzt wird, und/oder wobei eine Kennlinie ermittelt wird, die eine Abhängigkeit der ersten Motorparameter von den zweiten Motorparametern repräsentiert. 2. Es bietet den Vorteil, eine Beziehung zwischen den ersten und zweiten Motorparametern aufzeigen, welche das Erkennen des Verschleißzustandes einer Komponente des Türantriebssystems deutlich erleichtert.

Günstig ist eine Ausführungsform des hier vorgeschlagenen Ansatzes, bei der im Schritt des Einlesens als erster Motorparameter ein Motorstrom eines Elektromotors des Türantriebssystems eingelesen wird und/oder als zweiter Motorparameter ein Bewegungsweg und/oder einem Drehwinkel einer Achse des Motors des Türantriebssystems eingelesen wird, insbesondere wobei im Schritt des Einlesens der erste Motorparameter als von einem Bewegungsweg und/oder einem Drehwinkel des Motors als zweitem Motorparameter abhängig bereitgestellt wird. Eine solche Ausführungsform bietet den Vorteil, sehr zuverlässige und einfach aufzuzeichnende Signale zur Beurteilung des Verschleißzustands der Komponente verwenden zu können.

Besonders vorteilhaft ist eine Ausführungsform des hier vorgeschlagenen Ansatzes, bei der im Schritt des Prüfens die Steilheit und/oder das Krümmungsverhalten einer die Abfolge von ersten Motorparametern repräsentierenden Kennlinie an zumindest einer Stelle überprüft wird, um den Verschleißzustand der Komponente des Türantriebsystems zu erkennen. Die Steilheit kann hierbei beispielsweise durch das Bilden einer ersten Ableitung an einer Stelle der Abfolge von ersten Motorparametern (beispielsweise in Abhängigkeit bzw. Beziehung von den zweiten Motorparametern) ermittelt werden, sodass an dieser Stelle die Abfolge von ersten Motorparametern differenziert wird. Zur Beurteilung des Krümmungsverhaltens kann beispielsweise eine zweite Ableitung an der Stelle der Abfolge von ersten Motorparametern ermittelt werden. Eine solche Ausführungsform des hier vorgeschlagenen Ansatzes bietet den Vorteil, durch die technisch sehr einfach aufzuzeichnenden Signale eine effiziente Analyse ausführen zu können, sodass hieraus sehr einfach und präzise der Verschleißzustand der Komponente ermittelt werden kann.

Denkbar ist auch eine weitere Ausführungsform des hier vorgeschlagenen Ansatzes, bei der im Schritt des Prüfens die Steilheit und/oder das Krümmungsverhalten die Abfolge von ersten Motorparametern repräsentierenden Kennlinie mit einem Schwellwert als vorbestimmtem Kritierum verglichen wird, um den Verschleißzustand der Komponente zu erkennen. Eine solche Ausführungsform bietet den Vorteil, den Schritt des Prüfens technisch sehr einfach umzusetzen und dennoch eine hinreichend sichere Möglichkeit zur Erkennung des aktuellen Verschleißzustands der Komponente zu liefern.

Gemäß einer anderen Ausführungsform des hier vorgeschlagenen Ansatzes kann im Schritt des Prüfens der Verschleißzustand der Komponente erkannt werden, wenn die die Abfolge von ersten Motorparametern repräsentierende Kennlinie als vorbestimmtes Kriterium mindestens einen Vorzeichenwechsel des Krümmungsverhaltens, insbesondere zwei Vorzeichenwechsel des Krümmungsverhaltens aufweist und/oder eine Steilheit aufweist, die größer oder kleiner als ein vordefinierter Schwellenwert ist. Unter einem Krümmungsverhalten, welches einen Vorzeichenwechsel aufweist, kann ein Wendepunkt der Kennlinie verstanden werden. Eine solche Ausführungsform des hier vorgeschlagenen Ansatzes lässt sich mit mathematisch sehr einfachen Mitteln implementieren.

Technisch besonders relevant ist eine Ausführungsform des hier vorgeschlagenen Ansatzes, bei der im Schritt des Prüfens in Abhängigkeit von dem Wert eine Spannung eines Kraftübertragungselementes außerhalb eines Spannungsbereichs, eine außerhalb eines Elastizitätsbereichs liegende Elastizität eines Pufferelementes und/oder ein außerhalb eines Spielbereichs liegender Weg eines Spiels eines Linearantriebselementes als Verschleißzustand der Komponente des Türantriebssystems ermittelt wird. Eine solche Ausführungsform bietet den Vorteil, durch den hier vorgestellten Ansatz einen Verschleißzustand von Komponenten des Türantriebssystems ermitteln zu können, welche besonders stark genutzt und somit eine hohe Verschleißanfälligkeit aufweisen. Insofern lässt sich die Betriebs- und Ausfallsicherheit des Schienenfahrzeugs durch eine solche Ermittlung des Verschleißzustands der genannten Komponenten deutlich verbessern.

Günstig ist weiterhin einer Ausführungsform des hier vorgeschlagenen Ansatzes, bei der im Schritt des Einlesens ferner ein die Umgebungstemperatur repräsentierender Temperaturparameter eingelesen wird, wobei im Schritt des Prüfens der Verschleißzustand der Komponenten des Türantriebssystems unter Verwendung des Temperaturparameter erkannt wird. Unter einer Umgebungstemperatur kann eine Temperatur in unmittelbarer Umgebung der Komponente verstanden werden. Eine solche Ausführungsform bietet den Vorteil einer Berücksichtigung von oftmals temperaturabhängigen Materialeigenschaften wie einer Elastizität oder Spannungen bei der Beurteilung des Verschleißzustands der Komponente, wodurch sich der Verschleißzustand präziser erkennen bzw. ermitteln lässt.

Erfindungsgemäß wird vor dem Schritt des Einlesens ein Schritt des Arretierens und/oder des Hemmens zumindest einer Komponente des Türabtriebssystems mittels eines Stifts ausgeführt. Unter einem Arretieren und/oder Hemmen zumindest einer Komponente des Türantriebssystems kann ein Blockieren oder Bremsen der Komponente des Türantriebssystems in eine oder in mehrere Bewegungsrichtungen verstanden werden. Auf diese Weise kann sehr effizient der Verschleißzustand der Komponente des Türantriebssystems ermittelt werden, da nun durch einen Verschleiß entstandene Spielräume bei der Bewegung der Komponente des Türantriebssystems aufgedeckt bzw. ermittelt werden können.

Besonders voteilhaft ist eine Ausführungsform des hier vorgestellten Ansatzes, bei der im Schritt des Arretierens zumindest eine von mehreren Komponenten des Türantriebssystems arretiert wird, wobei im Schritt des Prüfens unter Verwendung des Wertes der Verschleißzustand einer nicht-arretierten Komponente erkannt wird. Alternativ oder zusätzlich können die Schritte des Verfahrens mit einem unterschiedlichen Zustand des Arretierens und/oder Hemmens von einer oder mehreren Komponenten des Türantriebssystems wiederholt ausgeführt werden, wobei im letzten Schritt des Prüfens die Abfolge der ersten Motorparameter repräsentierende Werte bei unterschiedlichen gehemmten und/oder arretierten Zuständen der Komponenten miteinander verglichen werden, um den Verschleißzustand einer Komponente des Türantriebssystems zu erkennen. Eine solche Ausführungsform des hier vorgestellten Ansatzes bietet den Vorteil, durch das Arretieren einer der Komponenten den Verschleißzustand einer anderen, nicht-arretierten Komponente besser erkennen zu können, gerade wenn auch die arretierte Komponente(n) einem gewissen Verschleiß unterliegen und somit aus dem oder den Motorparametern ein unzutreffender Rückschluss auf den Verschleiß einer konkreten (beispielsweise der nicht-arretierten) Komponente gezogen werden kann. Durch das Arretieren einer der Komponenten kann somit eine bessere Unterscheidung der Erkennung des Verschleißzustandes der einzelnen Komponenten ermöglicht werden. Auch kann durch den Vergleich der die Abfolge von Motorparametern repräsentierenden Werten bei unterschiedlichen gehemmten und/oder arretierten Zuständen der Komponenten sehr präzise der Verschleißzustand einer der beteiligten Komponenten ermittelt werden.

Auch kann gemäß einer weiteren Ausführungsform im Schritt des Prüfens ein eine verbleibende Lebensdauer repräsentierender Wert als Verschleißzustand der Komponente des Türantriebssystems ermittelt werden. Auf dieser Weise lässt sich einfach der Betriebszustand von Komponenten des Türantriebssystems einschätzen bzw. eine Vorhersage über einen zukünftig erforderlichen Wartungsaufwand vornehmen. Denkbar ist ferner auch eine stichprobenartige Verifizierung von ermittelten Indikatoren, beispielsweise durch manuelle Prüfung/Messung am Produkt bzw. der Komponente und/oder eine Aufzeichnung.

Günstig ist ferner auf eine Ausführungsform des hier vorgestellten Ansatzes, bei der die Schritte des Verfahrens mehrfach ausgeführt werden, wobei ein zeitlicher Verlauf eines den Verschleißzustand der Komponente des Türantriebssystems repräsentierenden Wertes aufgezeichnet wird. Beispielsweise kann ein den Verschleißzustand der Komponente des Türantriebssystems repräsentierenden Wert bei jedem Durchlauf der Schritte des Verfahrens erfasst werden und mit einem oder mehreren nachfolgend erfassten, den Verschleißzustand der Komponente des Türantriebssystems repräsentierenden Werten verglichen werden. Beispielsweise kann hierfür auch die Komponente in unterschiedliche Arretierungszustände versetzt werden (beispielsweise in einem Durchlauf arretiert sein und in einem nachfolgneden Durchlauf freigegeben sein, oder umgekehrt), wodurch die Komponente einem sehr flexiblen und schnell durchzuführenden Test auf den Verschleißzustand hin unterzogen werden kann. Diese Weise lässt sich vorteilhaft die graduelle Abnutzung der Komponente des Tür Antriebssystems überwachen und ebenfalls ein rechtzeitiger Austausch der Komponente vornehmen, um die Betriebssicherheit und Einsatzbereitschaft des Schienenfahrzeugs möglichst sicher zu gewährleisten.

Der hier vorgestellte Ansatz schafft ferner eine Vorrichtung gemäß Anspruch 13, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu weist die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten auf, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
- Fig. 1: eine Darstellung eines Schienenfahrzeugs zur Verwendung mit einem Ausführungsbeispiel der vorliegenden Erfindung;
- Fig. 2: eine Ansicht eines beispielhaften Türantriebssystems mit unterschiedlichen Komponenten und einer Vorrichtung gemäß einem Ausführungsbeispiel;
- Fig. 3: ein Diagramm mit Darstellungen von Zusammenhängen zwischen dem ersten Motorparameter (der auf der Ordinate abgebildet ist) in Abhängigkeit von dem zweiten Motorparameter (der auf der Abszisse abgebildet ist);
- Fig. 4: eine Diagramm-Darstellung zur Erläuterung der Erkennung einer Riemenspannung als Verschleißzustand einer Komponente des Türantriebssystems;
- Fig. 5: ein Diagramm zur Erläuterung der Möglichkeit zur Erkennung eines Spiels im Antriebsstrang bzw. eines entsprechenden Leerwegs;
- Fig. 6: ein Diagramm zur Erkennung des Verschleißzustandes bzw. der Alterung eines Pufferelemente wie dem Gummipuffer aus Fig. 2 als Komponente des Türantriebssystems; und
- Fig. 7: ein Ablaufdiagramm eines Verfahrens zum Erkennen eines Verschleißzustandes einer Komponente eines Türantriebssystems eines Schienenfahrzeugs.

Gleiche oder ähnliche Elemente werden in der nachfolgenden Beschreibung in unterschiedlichen Figuren durch gleiche oder ähnliche Bezugszeichen versehen, wobei aus Gründen der Übersichtlichkeit eine wiederholte Erläuterung diese Bezugszeichen vermieden wird.

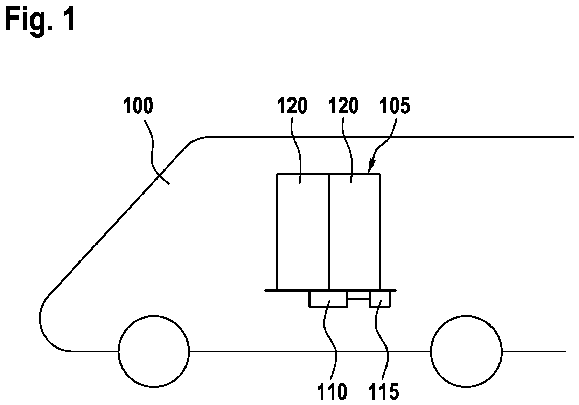

**Fig. 1** zeigt eine Darstellung eines Schienenfahrzeugs 100, dessen Türe 105 zum Zutritt von Passagieren ins Innere des Schienenfahrzeugs 100 von einem Türantriebssystem 110 mit einem Elektromotor 115 angetrieben wird. Das Türantriebssystem 110 kann hierbei derart ausgebildet sein, um Türflügel 120 der Türe 105 beim Öffnen der Türe 105 auseinander zu bewegen oder beim Schließen der Türen 105 aufeinander zu zu bewegen. Da ein solches Türantriebssystem 110 während des Betriebs des Schienenfahrzeugs 100 einer hohen und dauerhaften Belastung ausgesetzt ist, erleiden einzelne Komponenten eines solchen Türantriebssystems 110 wie beispielsweise Antriebsriemen zur Kraftübertragung, Gummipuffer zur Abfederung von Schlägen der Türflügel 120 an Endanschlägen des Bewegungsweges oder Spindel in der Form eines Linearantriebes zum Antreiben der Bewegung der Türflügel 120 Verschleißspuren, die auf Dauer zu einem Ausfall des Türantriebssystems 110 führen können. In diesem Fall wäre die Türe 105 nicht mehr zum Zutritt oder zum Austritt von Passagieren in das Schienenfahrzeug 100 oder aus dem Schienenfahrzeug 100 zu verwenden, wodurch der Betrieb des Schienenfahrzeugs 100 behindert ist, sodass beispielsweise die Haltezeiten des Schienenfahrzeugs 100 an Haltestationen erhöht sind, da die Passagiere durch weniger Türen 105 in das Schienenfahrzeug 100 oder aus dem Schienenfahrzeug 100 ein-/austreten können.

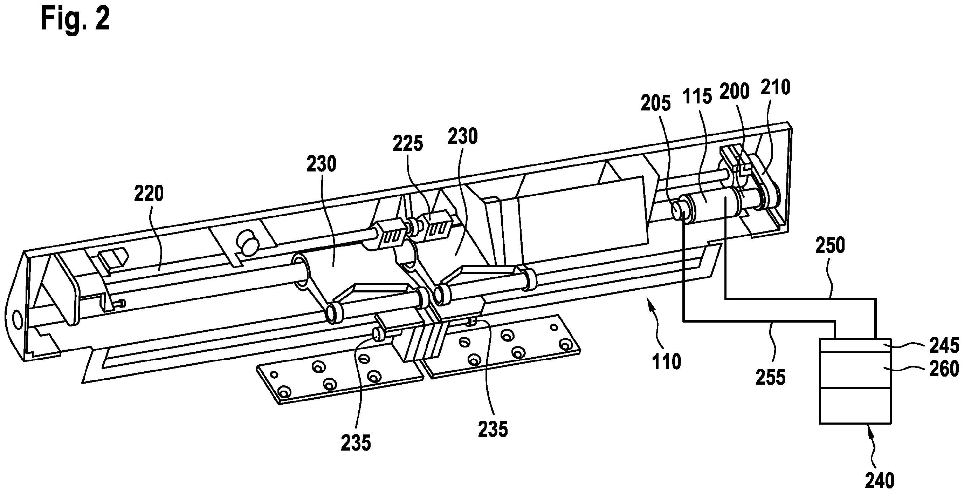

**Fig. 2** zeigt eine Ansicht eines beispielhaften Türantriebssystems 110, welches von dem Motor 115, der hier in der Form eines Elektromotors vorliegt, angetrieben wird. Hierbei umfasst das Türantriebssystem 110 eine Achse bzw. ein Getriebe 200, welches beispielsweise einen Weggeber 205 aufweist, um einen aktuellen Drehwinkel oder einen Drehwinkelverlauf der Achse des Motors 115 aufzuzeichnen, wobei dieser Drehwinkel oder Drehwinkelverlauf auch als Strecke bzw. Bewegungsweg der Achse des Motors 115 verstanden werden kann. Weiterhin ist aus der Fig. 2 ein Riemen 210 erkennbar, der als Kraftübertragungselement einer Kraft vom Getriebe 200 bzw. einer Welle des Motors 115 auf ein Linearantriebselement 220 wirkt. Das Linearantriebselement 220 weist in diesem Fall beispielsweise eine Spindelmutter 225 auf, die auf einem Gewinde des Linearantriebselementes 220 beweglich gelagert ist und die beispielsweise mit Türhalteelementen 230 gekoppelt ist. Über diese Türhalteelemente 230, an denen die in der Figur 2 nicht dargestellten Türflügel 120 befestigt sein können, wird somit beim Betrieb des Motors 115 ein Öffnen oder ein Schließen des betreffenden Türflügels 120 bzw. der Türe 105 realisiert. Um nun mechanische Abnutzungen möglichst gering zu halten, kann auch ein Pufferelement 235 (beispielsweise in der Form eines Gummipuffers) vorgesehen sein, der an einem Ende des Bewegungswegs eines Tür Halteelemente 230 angeordnet ist, sodass eine Materialbelastung beim Anschlagen des Türhalteelementes 230 bzw. des Türflügels 120 möglichst gering gehalten werden kann.

Um nun zu vermeiden, dass wie vorstehend bereits ausgeführt, ein übermäßiger Verschleiß von Komponenten des Türantriebssystems 110 zu einem Ausfall führt, ist eine Vorrichtung 240 zum Erkennen eines Verschleißzustands eine Komponente des Türantriebssystems 110 vorgesehen.

In dieser Vorrichtung 240, die beispielsweise als DCU ausgestaltet ist, ist eine Einleseschnittstelle 245 vorgesehen, um eine Abfolge eines ersten Motorparameters 250 in Abhängigkeit von einem zweiten Motorparameter 255 einzulesen. Beispielsweise kann der erste Motorparameter 250 ein Stromfluss und/oder ein Verlauf des Stromflusses sein, der durch Wicklungen eines als Elektromotor ausgebildeten Motors 115 fließt. Der zweite Motorparameter 255 kann beispielsweise der vorstehend genannte Drehwinkel, ein Verlauf des Drehwinkels oder eine Strecke der Umdrehungen der Achse des Motors 115 sein. Insofern kann in der Einleseschnittstelle 245 in der Vorrichtung 240 ein Zusammenhang zwischen dem ersten Motorparameter 250 und dem zweiten Motorparameter 255 ermittelt bzw. hergestellt werden, beispielsweise in der Form einer Kennlinie des ersten Motorparameter 250 in Abhängigkeit von dem zweiten Motorparameter 255. Dieser Zusammenhang wird dann eine Einrichtung 260 zum Prüfen des ersten Motorparameters 250 (genauer des Zusammenhangs des ersten Motorparameters 250 mit dem zweiten Motorparameter 255) auf ein vorbestimmtes Kriterium hin untersucht, um den Verschleißzustand einer Komponente des Türantriebssystems 110, beispielsweise eines Spannungszustands des Riemens 210, eines Spiels bzw. eines Leerwegs der Spindelmutter 225 im Linearantriebselement 220, welches beispielsweise als Gewindestange ausgebildet ist, oder eines Einfeserungswegs des Pufferelementes 235 zu erkennen.

Speziell kann hierbei das Erkennen des Verschleißzustandes der Komponente des Türantriebssystems 110 direkt dem Schienenfahrzeug 100 erfolgen. Denkbar ist jedoch auch ein Ausführungsbeispiel des hier vorgestellten Ansatzes, bei dem das Erkennen des Verschleißzustandes der Komponente des Türantriebssystems 110 extern des Schienenfahrzeugs 100, beispielsweise auf einem mobilen Rechner wie einem Laptop oder einem Smartphone oder in einem zentralen Rechner, beispielsweise in einer Werkstatt für das Schienenfahrzeug 100, ausgeführt werden.

Vor dem Einlesen der Motorparameter erfolgt n Arretieren, Hemmen, Bremsen und/oder Blockieren zumindest einer Komponente des Türantriebssystems 110.

Beispielsweise kann eine Bewegung des Getriebes 200 bzw. des Linearantriebselements 220 in eine oder mehrere Bewegungsrichtung in durch das Eingreifen eines in der Fig. 2 nicht dargestellten Stifts blockiert werden, sodass bei dennoch erfolgtem Betrieb des Motors 115 und dem Einlesen der Motorparameter ein Rückschluss darauf gezogen werden kann, wie der Bewegungsweg der betreffenden Komponente des Türantriebssystems 110 ist, woraus ein Rückschluss auf den Verschleißzustand diese betreffenden Komponente des Türantriebssystems 110 ermöglicht wird.

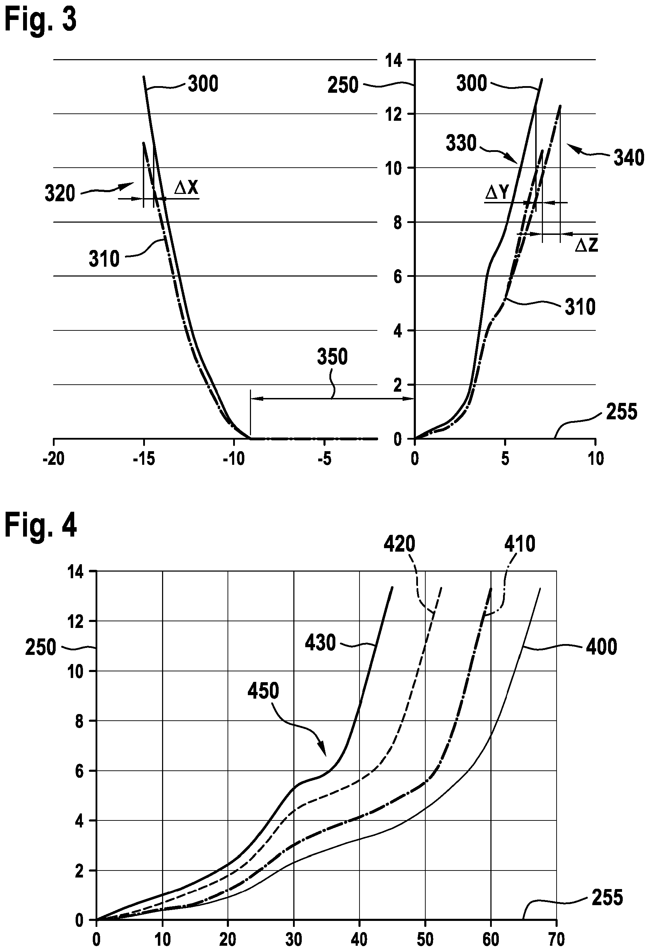

**Fig. 3** zeigt ein Diagramm mit Darstellungen von Zusammenhängen zwischen dem ersten Motorparameter 250 (der auf der Ordinate abgebildet ist) in Abhängigkeit von dem zweiten Motorparameter 255 (der auf der Abszisse abgebildet ist). Der erste Motorparameter 250 repräsentiert hierbei einen Wert eines Stromflusses (in Ampere) durch zumindest eine Wicklung des Elektromotors als Motor 115, wogegen der zweite Motorparameter 255 einen Drehwinkel einer Achse des Motors 115 (in Grad) repräsentiert. Zu erkennen sind zwei Kurven 300 und 310, die beispielsweise zu unterschiedlichen Zeitpunkten einen Zusammenhang zwischen dem Motorstrom als ersten Parameter 250 und dem Drehwinkel als zweiten Parameter 255 abbilden. Eine Analyse der Kurven 300 bzw. 310 ermöglicht nun beispielsweise die Bildung einer Ableitung oder die Ermittlung einer Steigung an einzelnen Stellen dieser Kurven 300 bzw. 310, um einen Verschleißzustand einer Komponente des Türantriebssystems 110 zu ermitteln. Beispielsweise kann im Bereich 320 und im Bereich 330 eine Steigung ΔX bzw. ΔY der Kurven 300 bzw. 310 (dem absoluten Wert nach) ermittelt werden, die auf einen zu stark gespannten Riemen 210 hinweist. Im Bereich 340 ΔZ des Diagramms aus Figur 3 ist erkennbar, dass die Kurse Beziehung zweite Kennlinie 310 über einen deutlich größeren (positiven) Bereich des Drehwinkels als zweiten Parameter 255 hinaus erstreckt, was auf ein defektes Pufferelement 235 schließen lässt, da in diesem Fall der Bewegungsweg deutlich länger ist. Auch kann im Bereich 350 erkannt werden, dass bei einem minimalen Stromfluss als dem ersten Motorparameter 250 ein sehr großer Drehwinkelbereich als zweiten Motorparameter 255 durchlaufen werden kann, sodass hieraus auf ein einen Leerweg bzw. ein Spiel der Spindelmutter 225 am Linearantriebselement 220 zurückgeschlossen werden kann. Derartige Rückschlüsse können beispielsweise dadurch gezogen werden, dass in der Einrichtung 260 zum Prüfen die Abfolge bzw. der Verlauf von ersten Motorparametern 250, die in Beziehung zum zweiten Motorparameter 255 gesetzt sind, mit einem vorbestimmten Kriterium verglichen werden, beispielsweise einem Schwellenwert für die Steilheit der Kennlinie 300 bzw. 310 an einem bestimmten Punkt oder einer bestimmten Stelle im Drehwinkelbereich zur Erkennung einer (nachlassenden oder zu starken) Spannung eines Riemens wie dem Riemen 210, ein auftretender möglicher verlängerter Bewegungsweg aus der Kennlinie 300 bzw. 310 im Bereich von bestimmten Drehwinkeln zur Erkennung von defekten Pufferelementen 235 und/oder eine Flachheit der Kennlinie in 300 bzw. 310 im Bereich eines niedrigen Werts für einen Stromfluss durch zumindest eine Wicklung des Motors 115 und/oder im Bereich eines geringen Drehwinkels.

**Fig. 4** zeigt eine Diagramm-Darstellung zur Erläuterung der Erkennung einer Riemenspannung als Verschleißzustand einer Komponente des Türantriebssystems 110. Hierbei sind wieder auf der X-Achse (Abszisse) der Drehwinkel in Grad als zweiter Motorparameter 255 und auf der Ordinate der Strom durch zum ist eine Wicklung des Motors 115 als erster Motorparameter 250 aufgetragen. Eine erste Kennlinie 400 kennzeichnet hierbei den Verlauf des Zusammenhangs zwischen dem ersten Motorparameter 250 und dem zweiten Motorparameter 255 bei einer minimalen Riemenspannung von 7 Millimetern bei 20N, wogegen die zweite Kennlinie 410 eine mittlere Riemenspannung von 5,5 Millimetern bei 20 N, eine dritte Kennlinie 420 eine maximale Riemenspannung bei 4 Millimetern bei 20 N und eine vierte Kennlinie 430 eine noch höhere Riemenspannung von 2,2 Millimetern bei 20 N. Insbesondere bei der dritten Kennlinie 420 und der vierten Kennlinie 430 ist erkennbar, dass sich im Bereich 450 repräsentiert ein Plateau ausbildet, welches sich durch zwei sich signifikant erkennbare Wendepunkte in den Kennlinien 420 und 430 auszeichnet. Insofern kann auch durch die Auswertung des Krümmungsverhaltens, durch welches die Wendepunkte bestimmt werden können, ein Rückschluss auf einen Spannungszustand eines Regiments als Komponente der Türantriebseinheit 110 ermöglicht.

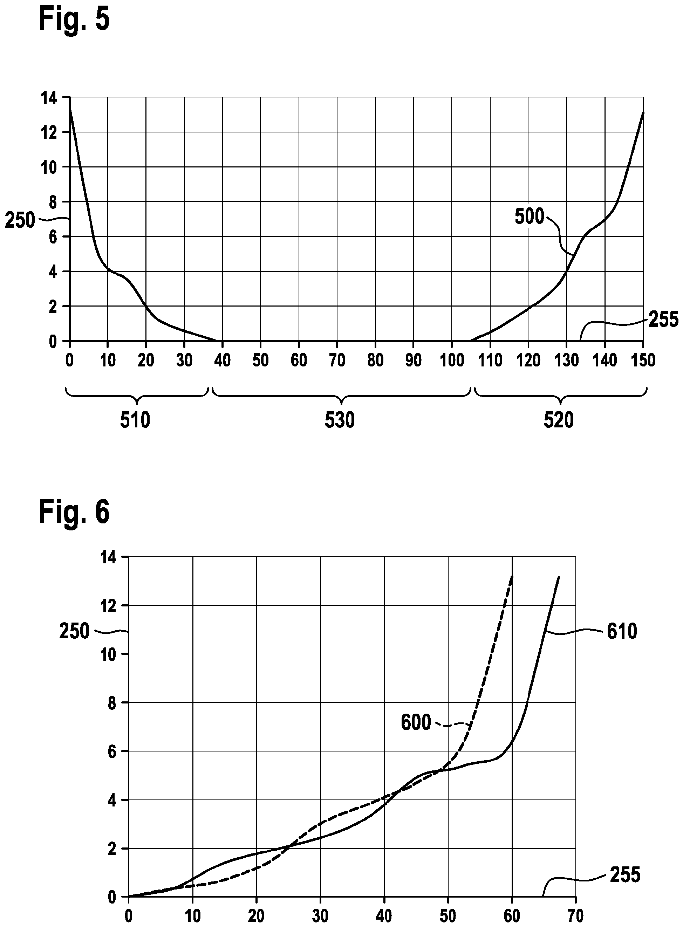

**FIG. 5** zeigt ein Diagramm zur Erläuterung der Möglichkeit zur Erkennung eines Spiels im Antriebsstrang bzw. eines entsprechenden Leerwegs. Dieser Leerweg entspricht beispielsweise dem Spiel der Spindelmutter 225 und kann auch andere Toleranzen wie beispielsweise einer Passfeder am Zahnrad oder dergleichen enthalten, welche sich jedoch kaum ändern und somit keine bzw. eine unwesentliche Auswirkung auf das Spiel der Spindelmutter 225 haben. Aus dem Diagramm in Figur 5 ist wiederum eine Kennlinie 500 dargestellt, die den Verlauf des ersten Motorparameters 250 in Abhängigkeit vom zweiten Motorparameter 255 darstellt. In einem ersten Bereich 510 lässt sich eine Riemendehnung eines Riemens beim Schließen des Türflügels 120 erkennen, wogegen sich im zweiten Bereich 520 eine Riemendehnung beim Öffnen des Türflügels 120 wiedergeben lässt. In einem dritten, mittleren Bereich 530 verläuft die Kennlinie 500 sehr flach bei einem Wert des Stromflusses durch zumindest eine Wicklung des Motors 115 bei nahezu null über einen sehr großen Bereich des Drehwinkels als zweitem Motorparameter 255, sodass hieraus geschlossen werden kann, dass sich eine Komponente des Türantriebssystems 110 sehr leichtgängig bewegen lässt, sodass ein Rückschluss auf ein großes Spiel der Spindelmutter 225 gezogen werden kann.

**Fig. 6** zeigt ein Diagramm zur Erkennung des Verschleißzustandes bzw. der Alterung eines Pufferelemente wie dem Gummipuffer 235 aus Fig. 2 als Komponente des Türantriebssystems 110. Gezeigt sind wiederum bzw. Kennlinie 610 und 620, wobei die Kennlinie 610 den Zusammenhang zwischen dem ersten Motorparameter und dem zweiten Motorparameter bei einem funktionsfähigen Pufferelement 235 darstellt, wogegen die zweite Kennlinie 620 den Zusammenhang zwischen dem ersten Motorparameter 250 und dem zweiten Motorparameter 255 bei einem verhärteten oder verschlissenen Pufferelement mit entsprechend reduzierter Elastizität wiedergibt. Erkennbar wird dies aus der Tatsache, dass die Kennlinie 620 bei einem bereits deutlich geringeren Drehwinkel als zweiten Motorparameter 255 einen hohen Wert für den ersten Motorparameter 250 (Stromfluss durch zum ist eine Wicklung des Motors 115) aufweist.

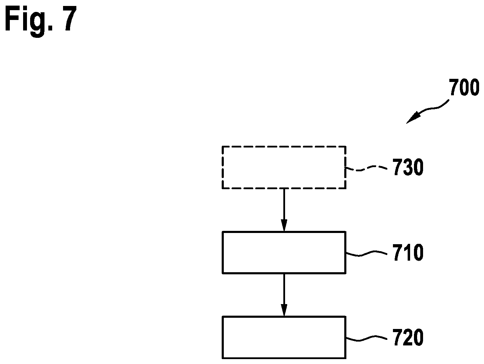

**Fig. 7** zeigt ein Ablaufdiagramm 700 eines Verfahrens zum Erkennen eines Verschleißzustandes einer Komponente eines Türantriebssystems eines Schienenfahrzeugs. Das Verfahren 700 umfasst Schritt 710 des Einlesens einer Abfolge von ersten Motorparametern und zweiten Motorparametern, wobei die ersten Motorparameter eine unterschiedliche physikalische Größe eines Motors des Türnstriebssystems repräsentieren, als die zweiten Motorparameter. Weiterhin umfasst das Verfahren 700 einen Schritt 720 des Prüfens, ob ein die Abfolge des ersten Motorparameters repräsentierender Wert ein vorbestimmtes Kriterium erfüllt, um den Verschleißzustand der Komponente des Türantriebssystems zu erkennen.

Zusammenfassend ist anzumerken, dass mit dem hier vorgestellten Ansatz eine Arretierung der Türe in halb offener Position mittels einer Vorrichtung vorgestellt wird, bei der beispielsweise ein Start eines Prüflaufes erfolgen kann, welcher die Türe hin und her bewegt und bei Erreichung eines Wiederstandes den Strom geregelt hochsteuert, um die Elastizität / das Spiel des Antriebsstranges oder einer Komponente hiervon zu erfassen. Beispielsweise kann eine Riemenspannung, ein Spindelverschleiß oder Spiele in Verbindungselementen hierdurch erkannt werden. Eine Unterscheidung des Verschleißzustandes der betreffenden Elemente kann durch eine Auswertung des Verlaufs der Kennlinie, beispielsweise auch in Kombination mit weiteren Parametern wie z.B. der Umgebungstemperatur erfolgen, da eine solche Temperatur beispielsweise die Elastizität von Komponenten des Türantriebssystems beeinflusst. Von Vorteil ist ein erster Schritt 730 des Arretierens und/oder des Hemmens zumindest einer Komponente des Türabtriebssystems vorhanden, der vor dem Schritt des Einlesens 710 ausgeführt wird. In einem günstigen Ausführungsbeispiel kann auch im Schritt 730 des Arretierens zumindest eine von mehreren Komponenten des Türantriebssystems arretiert und/oder gehemmt werden, wobei dann im Schritt des Prüfens 720 unter Verwendung des Werts ein Hinweis auf den Verschleißzustand einer nicht-arretierten Komponente erkannt wird. Alternativ oder zusätzlich können die Schritte des Verfahrens 700 mit einem unterschiedlichen Zustand des Arretierens und/oder Hemmens von einer oder mehreren Komponenten des Türantriebssystems wiederholt ausgeführt werden, wobei im letzten Schritt 720 des Prüfens die Abfolge der ersten Motorparameter repräsentierende Werte bei den unterschiedlichen gehemmten und/oder arretierten Zuständen der Komponenten miteinander verglichen werden, um den Verschleißzustand einer Komponente des Türantriebssystems zu erkennen. Auf diese Weise ist es dann möglich, den Verschleißzustand einer (hier der nicht-arretierten) Komponente optimal erkennen zu können, speziell, wenn auch andere Komponenten des Türantriebssystems einem Verschleiß unterliegen, sodass aus den Motorparametern anderenfalls ein "Verschleißzustand" von mehreren Komponenten gemeinsam erkennbar wäre. Durch den Vergleich von Werten, die auf einer gehemmten und/oder arretierten Komponente einerseits und einer ungehemmten und/oder nicht-arretierten Komponente andererseits basieren, lassen sich ebenfalls sehr präzise Aussagen über den Vergleichszustand einer der Komponenten ziehen. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Schienenfahrzeug
- 105: Türe
- 110: Türantriebssystem
- 115: Motor, Elektromotor
- 120: Türflügel

- 200: Getriebe
- 205: Drehwinkelgeber, Weggeber, Drehwinkelsensor
- 210: Riemen, Kraftübertragungselement
- 220: Linearantriebselement
- 225: Spindelmutter
- 230: Türhalteelemente
- 235: Pufferelement
- 240: Vorrichtung zum Erkennen
- 245: Einleseschnittstelle
- 250: ertsre Motorparameter
- 255: zweiter Motorparameter
- 260: Einrichtung zum Prüfen

- 300: Kennlinie
- 310: Kennlinie
- 320: erster Beeich
- 330: zweiter Bereich
- 340: dritter Bereich
- 350: vierter Bereich

- 400: Kennlinie
- 410: Kennlinie
- 420: Kennlinie
- 430: Kennlinie
- 450: Plateaubereich
- 500: Kennlinie
- 510: Bereich
- 520: Bereich
- 530: Bereich

- 610: Kennlinie
- 620: Kennlinie

- 700: Verfahren zum Erkennen
- 710: Schritt des Einlesens
- 720: Schritt des Prüfens
- 730: Schritt des Arretierens

## Patentansprüche

1. Computerimplementiertes Verfahren (700) zum Erkennen eines Verschleißzustandes einer Komponente (210, 225, 235) eines Türantriebssystems (110) eines Schienenfahrzeugs (100), wobei das Verfahren (700) die folgenden Schritte aufweist:
- einen Schritt des Einlesens (710) einer Abfolge von ersten Motorparametern (250) eines Elektromotors des Türantriebssystems (110) und zweiten Motorparametern (255) des Elektromotors des Türantriebssystems (110), wobei die ersten Motorparameter (250) eine unterschiedliche physikalische Größe des Elektromotors (115) des Türantriebssystems (110) repräsentieren, als die zweiten Motorparameter (255), **dadurch gekennzeichnet, dass**
- vor dem Schritt des Einlesens (710) ein Schritt des Arretierens und/oder des Hemmens (730) zumindest einer Komponente (210, 225, 235) des Türantriebssystems (110) mittels eines Stifts durchgeführt wird, und nach dem Schritt des Einlesens (710)
- ein Schritt (720) des Prüfens (720) durchgeführt wird, ob ein Zusammenhang der Abfolge des ersten Motorparameters (250) mit der Abfolge des zweiten Motorparameters (255) repräsentierender Wert ein vorbestimmtes Kriterium erfüllt, um den Verschleißzustand der Komponente (210, 225, 235) des Türantriebssystems (115) zu erkennen.

2. Verfahren (700) gemäß Anspruch 1 , **dadurch gekennzeichnet, dass** im Schritt des Einlesens (710) erste Motorparameter (250) in Beziehung zu zweiten Motorparametern (255) gesetzt werden, und/oder je ein erster Motorparameter (250) der Abfolge von ersten Motorparametern (250) in eine Beziehung zu einem zweiten der Abfolge von zweiten Motoparametern gesetzt wird, und/oder eine Kennlinie ermittelt wird, die eine Abhängigkeit der ersten Motorparameter (250) von den zweiten Motorparametern (255) repräsentiert.

3. Verfahren (700) gemäß einem der vorangegangenen Ansprüche, **dadurch gekennzeichnet, dass** im Schritt des Einlesens (710) als erster Motorparameter (250) ein Motorstrom des Elektromotors des Türantriebssystems (110) eingelesen wird, und/oder als zweiter Motorparameter (255) ein Bewegungsweg und/oder ein Drehwinkel einer Achse des Elektromotors (115) des Türantriebssystems (110) eingelesen wird.

4. Verfahren (700) nach Anspruch 3, **dadurch gekennzeichnet, dass** im Schritt des Einlesens (710) der erste Motorparameter (250) als von dem Bewegungsweg und/oder dem Drehwinkel als zweitem Motorparameter (255) abhängig bereitgestellt wird.

5. Verfahren (700) gemäß einem der vorangegangenen Ansprüche, **dadurch gekennzeichnet, dass** im Schritt des Prüfens (720) die Steilheit und/oder das Krümmungsverhalten einer die Abfolge von ersten Motorparametern (250) repräsentierenden Kennlinie an zumindest einer Stelle überprüft wird, um den Verschleißzustand der Komponente (210, 225, 235) des Türantriebssystems (110) zu erkennen.

6. Verfahren (700) gemäß Anspruch 5, **dadurch gekennzeichnet, dass** im Schritt des Prüfens (720) die Steilheit und/oder das Krümmungsverhalten der die Abfolge von ersten Motorparametern (250) repräsentierenden Kennlinie mit einem Schwellwert als vorbestimmten Kritierum verglichen wird, um den Verschleißzustand der Komponente (210, 225, 235) zu erkennen.

7. Verfahren (700) gemäß Anspruch 5 oder 6, **dadurch gekennzeichnet, dass** im Schritt des Prüfens (720) der Verschleißzustand der Komponente (210, 225, 235) erkannt wird, wenn die die Abfolge von ersten Motorparametern (250) repräsentierende Kennlinie als vorbestimmtes Kriterium mindestens einen Vorzeichenwechsel des Krümmungsverhaltens, insbesondere zwei Vorzeichenwechsel des Krümmungsverhaltens aufweist und/oder eine Steilheit aufweist, die größer oder kleiner als ein vordefinierter Schwellwert ist.

8. Verfahren (700) gemäß einem der vorangegangenen Ansprüche, **dadurch gekennzeichnet, dass** im Schritt des Prüfens (720) in Abhängigkeit von dem Wert eine Spannung eines Kraftübertragungselementes (210) außerhalb eines Spannungsbereichs, eine außerhalb eines Elastizitätsbereichs liegende Elastizität eines Pufferelementes (235) und/oder ein außerhalb eines Spielbereichs liegender Weg eines Spiels eines Linearantriebselementes (225) als Verschleißzustand der Komponente (210, 225, 235) des Türantriebssystems (110) ermittelt wird.

9. Verfahren (700) gemäß einem der vorangegangenen Ansprüche, **dadurch gekennzeichnet, dass** im Schritt des Einlesens (710) ferner ein die Umgebungstemperatur repräsentierender Temperaturparameter eingelesen wird, wobei im Schritt des Prüfens der Verschleißzustand der Komponente (210, 225, 235) des Türantriebssystems (110) unter Verwendung des Temperaturparameters erkannt wird.

10. Verfahren gemäß einem der vorangegangenen Ansprüche,
**dadurch gekennzeichnet, dass**
im Schritt (730) des Arretierens zumindest eine von mehreren Komponenten (210, 225, 235) des Türantriebssystems (110) arretiert wird, wobei im Schritt (720) des Prüfens unter Verwendung des Wertes der Verschleißzustand einer nicht-arretierten Komponente (210, 225, 235) erkannt wird und/oder
wobei die Schritte (710, 720, 730) mit einem unterschiedlichen Zustand des Arretierens und/oder Hemmens von einer oder mehreren Komponenten (210, 225, 235) des Türantriebssystems (110) wiederholt ausgeführt werden, wobei im letzten Schritt des Prüfens (720) die Abfolge der ersten Motorparameter (250) repräsentierende Werte bei unterschiedlichen gehemmten und/oder arretierten Zuständen der Komponenten (210, 225, 235) miteinander verglichen werden, um den Verschleißzustand einer Komponente (210, 2254, 235) des Türantriebssystems (110) zu erkennen.

11. Verfahren gemäß einem der vorangegangenen Ansprüche, **dadurch gekennzeichnet, dass** im Schritt (720) des Prüfens ein eine verbleibende Lebensdauer repräsentierender Wert als Verschleißzustand der Komponente (210, 225, 235) des Türantriebssystems (110) ermittelt wird.

12. Verfahren gemäß einem der vorangegangenen Ansprüche, **dadurch gekennzeichnet, dass** die Schritte (710, 720, 730) des Verfahrens (700) mehrfach ausgeführt werden, wobei ein zeitlicher Verlauf eines den Verschleißzustand der Komponente (210, 225, 235) des Türantriebssystems (110) repräsentierenden Wertes aufgezeichnet wird.

13. Vorrichtung (240), die eingerichtet ist, um die Schritte des Verfahrens (700) gemäß einem der vorangegangenen Ansprüche in entsprechenden Einheiten auszuführen und/oder anzusteuern, wobei die Vorrichtung (240)
- zumindest eine Recheneinheit zum Verarbeiten von Signalen oder Daten, und
- zumindest eine Spechereinheit zum Speichern von Signalen und Daten, und
- zumindest eine Schnittstelle (245) zu einem Sensor (205) zum Einlesen von Sensorsignalen von dem Sensor (205),
- zumindest einen Sensor zum Erfassen des ersten Motorparameters (250) und des zweiten Motorparameters (255) aufweist.

14. Computerprogramm, das dazu eingerichtet ist, das Verfahren (700) gemäß einem der Ansprüche 1 bis 12 auszuführen und/oder anzusteuern.

15. Maschinenlesbares Speichermedium, auf dem das Computerprogramm nach Anspruch 14 gespeichert ist.

## Claims

1. Computer-implemented method (700) for detecting a state of wear of a component (210, 225, 235) of a door drive system (110) of a rail vehicle (100), wherein the method (700) comprises the following steps:
- a step of reading in (710) a sequence of first motor parameters (250) of an electric motor of the door drive system (110) and second motor parameters (255) of the electric motor of the door drive system (110), wherein the first motor parameters (250) represent a different physical variable of the electric motor (115) of the door drive systems (110) than the second motor parameters (255),
**characterised in that**
- before the reading in step (710) a step (730) of arresting and/or of retarding at least one component (210, 225, 235) of the door drive systems (110) by means of a pin is performed, and after the reading in step (710)
- a step (720) of testing (720) is performed whether a value which represents the correlation of the sequence of the first motor parameter (250) with the sequence of the second motor parameter (255) satisfies a predetermined criterion in order to detect the state of wear of the component (210, 225, 235) of the door drive system (115).

2. Method (700) according to claim 1, **characterised in that** in the reading in step (710) first motor parameters (250) are related to second motor parameters (255), and/or in each case a first motor parameter (250) of the sequence of first motor parameters (250) is related to a second of the sequence of second motor parameters, and/or a characteristic curve is determined which represents a dependence of the first motor parameter (250) on the second motor parameters (255).

3. Method (700) according to any of the preceding claims, **characterised in that** in the reading in step (710) a motor current of the electric motor of the door drive system (110) is read in as a first motor parameter (250), and/or a moving path and/or a rotational angle of an axle of the motor (115) of the door drive system (110) is read in as a second motor parameter (255)

4. Method (700) according to claim 3, **characterised in that** in the reading in step (710) the first motor parameter (250) is made available as dependent on a movement path and/or rotational angle of the motor as a second motor parameter (255).

5. Method (700) according to any of the preceding claims, **characterised in that** in the testing step (720) the steepness and/or the curvature behaviour of a characteristic curve which represents the sequence of first motor parameters (250) is tested at at least one point in order to detect the state of wear of the component (210, 225, 235) of the door drive system (110).

6. Method (700) according to claim 5, **characterised in that** in the testing step (720) the steepness and/or the curvature behaviour of the characteristic curve which represents the sequence of first motor parameters (250) is compared to a threshold value as a predetermined criterion, in order to detect the state of wear of the component (210, 225, 235).

7. Method (700) according to claim 5 or 6, **characterised in that** in the testing step (720) the state of wear of the component (210, 225, 235) is detected if the characteristic curve which represents the sequence of first motor parameters (250) has, as a predetermined criterion, at least one change of sign of the curvature behaviour, in particular two changes of sign of the curvature behaviour, and/or has a steepness which is greater than or less than a predetermined threshold value.

8. Method (700) according to any of the preceding claims, **characterised in that** in the testing step (720) , depending on the value, a voltage of a force transmission element (210) outside a voltage range is determined, a degree of elasticity of a buffer element (235) which is outside an elasticity range is determined, and/or an amount of play of a linear drive system (225) which lies outside a play range is determined as a state of wear of the component (210, 225, 235) of the door drive systems (110).

9. Method (700) according to any of the preceding claims, **characterised in that** in the reading in step (710) a temperature parameter which represents the ambient temperature is also read in, wherein in the testing step the state of wear of the component (210, 225, 235) of the door drive systems (110) is detected using the temperature parameter.

10. Method (700) according to any of the preceding claims,
**characterised in that**
in the arresting step (730) at least one of a plurality of components (210, 225, 235) of the door drive system (110) is arrested, wherein in the testing step (720) the state of wear of a non-arrested component (210, 225, 235) is detected using the value, and/or
wherein the steps (710, 720, 730) are executed repeatedly with a different state of arresting and/or retarding of one or more components (210, 225, 235) of the door drive system (110), wherein in the last testing step (720) the sequence of the first values representing motor parameters (250) are compared to one another in different retarded and/or arrested states of the components (210, 225, 235), in order to detect the state of wear of a component (210, 2254, 235) of the door drive system (110).

11. Method according to any of the preceding claims, **characterised in that** in the testing step (720) a value which represents the remaining service life is determined as the state of wear of the component (210, 225, 235) of the door drive system (110).

12. Method according to any of the preceding claims, **characterised in that** the steps (710, 720, 730) of the method (700) are executed repeatedly, wherein a time profile of a value which represents the state of wear of the component (210, 225, 235) of the door drive systems (110) is recorded.

13. Device (240) which is configured to execute and/or actuate the steps of the method (700) according to any of the preceding claims in corresponding units (245, 260), the device (240) having
- at least one central processing unit for processing signals or data, and
- at least one memory unit for storing signals or data, and
- at least one interface (245) to a sensor (205) for reading in sensor signals from the sensor (205,
- at least one sensor for detecting the first motor parameter (250) and the second motor parameter (255).

14. Computer programme which is configured to execute and/or actuate the method (700) according to any of claims 1 to 12.

15. Machine-readable storage medium in which the computer programme according to claim 14 is stored.

## Revendications

1. Procédé (700) mis en œuvre par ordinateur de détection d'un état d'usure d'un composant (210, 225, 235) d'un système (110) d'entraînement de porte d'un véhicule (100) ferroviaire, dans lequel le procédé (700) a les stades suivants :
- un stade de lecture (710) d'une séquence de premiers paramètres (250) d'un moteur électrique du système (110) d'entraînement de porte et de deuxièmes paramètres (255) du moteur électrique du système (110) d'entraînement de porte, dans lequel les premiers paramètres (250) du moteur représentent une grandeur physique différente du moteur (115) électrique du système (110) d'entraînement de porte que les deuxièmes paramètres (255) du moteur ;
**caractérisé en ce qu'**
- avant le stade (710) de la lecture, on effectue un stade (730) d'arrêt et/ou d'inhibition d'au moins un composant (210, 225, 235) du système (110) d'entraînement de porte au moyen d'une broche et, après le stade de la lecture(710),
- on effectue un stade (720) de contrôle (720) du point de savoir, si une valeur représentant une relation de la séquence du premier paramètre (250) du moteur à la séquence du deuxième paramètre (255) du moteur satisfait un critère défini à l'avance, afin de détecter l'état d'usure du composant (210, 225, 235) du système (115) d'entraînement de porte.

2. Procédé (700) suivant la revendication 1, **caractérisé en ce que**, dans le stade (710) de la lecture, on met des premiers paramètres (250) du moteur en relation avec des deuxièmes paramètres (255) du moteur, et/ou on met respectivement un premier paramètre (250) du moteur de la séquence de premiers paramètres (250) de moteur en relation avec un deuxième de la séquence de deuxièmes paramètres du moteur, et on détermine une courbe caractéristique, qui représente une variation des premiers paramètres (250) du moteur en fonction des deuxièmes paramètres (255) du moteur.

3. Procédé (700) suivant l'une des revendications précédentes, **caractérisé en ce que**, dans le stade (710) de la lecture, on lit, comme premiers paramètres (250) du moteur, un courant du moteur électrique du système (110) d'entraînement de porte, et/ou on lit, comme deuxièmes paramètres (255) du moteur, une course de déplacement et/ou un angle de rotation d'un axe du moteur (115) électrique du système (110) d'entraînement de porte.

4. Procédé (700) suivant la revendication 3, **caractérisé en ce que**, dans le stade (710) de la lecture, on dispose du premier paramètre (250) du moteur, comme dépendant de la courbe de déplacement et/ou de l'angle de rotation, comme deuxième paramètre (255) du moteur.

5. Procédé (700) suivant l'une des revendications précédentes, **caractérisé en ce que**, dans le stade (720) du contrôle, on contrôle en au moins un point, la pente et/ou le comportement en courbure d'une courbe caractéristique représentant la séquence de premiers paramètres (250) du moteur, afin de détecter l'état d'usure du composant (210, 225, 235) du système (110) d'entraînement de porte.

6. Procédé (700) suivant la revendication 5, **caractérisé en ce que**, dans le stade (720) du contrôle, on compare la pente et/ou le comportement en courbure de la courbe caractéristique représentant la séquence de premiers paramètres (250) du moteur à une valeur de seuil, comme critère défini à l'avance, afin de détecter l'état d'usure du composant (210, 225, 235).

7. Procédé (700) suivant la revendication 5 ou 6, **caractérisé en ce que**, dans le stade (720) du contrôle de l'état d'usure du composant (210, 225, 235), on détecte, si la courbe caractéristique représentant la séquence de premiers paramètres (250) du moteur, comme critère défini à l'avance, a au moins un changement de signe du comportement en courbure, en particulier deux changements de signes du comportement en courbure, et/ou a une pente, qui est plus grande ou plus petite qu'une valeur de seuil définie à l'avance.

8. Procédé (700) suivant l'une des revendications précédentes, **caractérisé en ce que**, dans le stade (720) du contrôle, on détermine, en fonction de la valeur d'une tension d'un élément (210) de transmission de force à l'extérieur d'une plage de tensions, une élasticité, se trouvant à l'extérieur d'une plage d'élasticité, d'un élément (235) tampon et/ou une course, se trouvant à l'extérieur d'une plage de jeu, d'un jeu d'un élément (225) d'entraînement linéaire, comme état d'usure du composant (210, 225, 235) du système (110) d'entraînement de porte.

9. Procédé (700) suivant l'une des revendications précédentes, **caractérisé en ce que**, dans le stade (710) de la lecture, on lit en outre un paramètre de température représentant la température ambiante, dans lequel, dans le stade du contrôle, on détecte l'état d'usure du composant (210, 225, 235) du système (110) d'entraînement de porte en utilisant le paramètre de température.

10. Procédé suivant l'une des revendications précédentes, **caractérisé en ce que**
dans le stade (730) de l'arrêt, on arrête au moins l'un de plusieurs composants (210, 225, 235) du système (110) d'entraînement de porte, dans lequel, dans le stade (720) du contrôle, on détecte, en utilisant l'état d'usure d'un composant (210, 225, 235), qui n'est pas arrêté, et/ou dans lequel on effectue les stades (710, 720, 730) avec un état différent de l'arrêt et/ou d'inhibition de l'un ou de plusieurs composants (210, 225, 235) du système (110) d'entraînement de porte, dans lequel, dans le dernier stade (720) du contrôle, on compare entre elles des valeurs représentant la séquence des premiers paramètres (250) du moteur à des états inhibés et/ou arrêtés différents des composants (210, 225, 235), afin de détecter l'état d'usure d'un composant (210, 2254, 235) du système (110) d'entraînement de porte.

11. Procédé suivant l'une des revendications précédentes, **caractérisé en ce que**, dans le stade (720) du contrôle, on détermine une valeur représentant une durée de vie restante comme état d'usure du composant (210, 225, 235) du système (110) d'entraînement de porte.

12. Procédé suivant l'une des revendications précédentes, **caractérisé en ce que** l'on effectue les stades (710, 720, 730) du procédé (700) en plusieurs fois, dans lequel on enregistre une courbe en fonction du temps d'une valeur représentant l'état d'usure du composant (210, 225, 235) du système (110) d'entraînement de porte.

13. Dispositif (240), qui est agencé pour réaliser et/ou commander les stades du procédé (700) suivant l'une des revendications précédentes, dans des unités correspondantes, dans lequel le dispositif (240) a
- au moins une unité informatique de traitement de signaux ou de données, et
- au moins une unité de mémoire pour la mise en mémoire de signaux et de données, et
- au moins une interface (245) avec un capteur (205) de lecture de signaux par le capteur (205),
- au moins un capteur de détection du premier paramètre (250) de moteur et du deuxième paramètre (255) de moteur.

14. Programme d'ordinateur, qui est agencé pour effectuer et/ou commander le procédé (700) suivant l'une des revendications 1 à 12.

15. Support de mémoire, déchiffrable par machine, sur lequel le programme d'ordinateur de la revendication 14 est mis en mémoire.
